# EUROPÄISCHE PATENTANMELDUNG

(11) **EP 2 345 832 A2**
(43) Veröffentlichungstag der Anmeldung: **20.07.2011**
(21) Anmeldenummer: 11151275.2
(22) Anmeldetag: 18.01.2011
(51) Int. Cl.: F16L 11/08

(54) **Flexibler Schlauch und Verfahren zum Herstellen**

(30) Priorität: 19.01.2010 DE 102010005140
(71) Anmelder: foxiflex GmbH & Co. KG, 14797 Kloster Lehnin OT Rietz (DE)
(72) Erfinder: Mütherich, Hiltrud, 14469 Potsdam (DE)
(74) Vertreter: Bittner, Thomas L.

(57) **Zusammenfassung**

Die Erfindung betrifft einen flexiblen Schlauch mit einer Schlauchwand (4) und einer Schlauchverstärkung (5), die an der Schlauchwand (4) spiralförmig gebildet ist, wobei die Schlauchwand (4) und / oder die Schlauchverstärkung (5) wenigstens teilweise aus einem extrudierten thermoplastischen Material bestehen, nämlich einem thermoplastischen Elastomer oder einem Thermoplast, welches als Füllstoff eine Beimischung von die Abriebfestigkeit erhöhenden Partikeln enthält. Weiterhin ist ein Verfahren zum Herstellen geschaffen. (Fig. 1)

## Beschreibung

Die Erfindung betrifft einen flexiblen Schlauch mit einer Schlauchwand und einer Schlauchverstärkung sowie ein Verfahren zur Herstellung.

### Hintergrund der Erfindung

Derartige Schläuche gehören zu den flexiblen oder biegsamen technischen Schläuchen, die in verschiedenen industriellen Anwendungen zum Einsatz kommen, um Feststoffe oder Fluide zu transportieren. Flexible Schläuche mit einer spiralförmig gebildeten Schlauchverstärkung oder -armierung sind in verschiedenen Ausführungen bekannt.

Das Dokument DE 298 18 930 U1 beschreibt einen Wickelschlauch, der aus einem spiral-oder wendelförmig gewickelten Band und einer spiralförmigen Armierung besteht, wobei die Wicklungen des Bandes sich randseitig überlappen und in den sich überlappenden Randabschnitten miteinander verbunden sind. Zwischen den sich überlappenden Randabschnitten des Bandes ist die spiralförmige Armierung angeordnet.

Das Dokument WO 2007/121906 A1 offenbart eine flexible Schlauchleitung mit helix- oder spiralförmig verlaufender Verstärkung, wobei bei der bekannten Schlauchleitung eine äußere Schicht mit einer helixförmig verlaufenden äußeren Werkstoffbahn gebildet ist. Die Schlauchverstärkung oder -armierung in Form eines Federstahldrahtes ist in ein extrudiertes Band eingelassen, welches zur Schlauchherstellung dann wendelförmig gewickelt wird.

Aus dem Dokument DE 297 10 123 U1 ist eine biegsame Schlauchleitung bekannt, bei der die Schlauchverstärkung mit einem spiral- oder wendelförmig umlaufenden Kunststoffschlauch bebildet ist. In dem Dokument EP 0 694 723 B 1 ist eine Ausführungsform für eine flexibel bzw. biegsame Schlauchleitung offenbart, bei der die Schlauchwand in einem einseitig offenen Profil der Schlauchverstärkung geklemmt ist.

Die technischen Schläuche mit spiralförmige Schlauchverstärkung oder -armierung, welche im Unterdruckbereich oder Überdruckbereich zum Einsatz kommen, müssen regelmäßig über eine ausreichende Abriebfestigkeit verfügen. Um diese Anforderungen in erhöhtem Umfang zu erfüllen, ist im Stand der Technik vorgesehen, die Dicke der Schlauchwand zu erhöhen.

### Zusammenfassung der Erfindung

Aufgabe der Erfindung ist es, einen flexiblen bzw. biegsamen Schlauch sowie ein Verfahren zum Herstellen zu schaffen, mit denen Schlauchprodukte mit verbesserter Abriebfestigkeit zur Verfügung gestellt werden können. Darüber hinaus soll die Effizienz der Herstellung verbessert werden, insbesondere hinsichtlich des Materialverbrauches.

Diese Aufgabe wird erfindungsgemäß durch einen flexiblen Schlauch nach dem unabhängigen Schlauch nach dem unabhängigen Anspruch 1 sowie ein Verfahren zum Herstellen nach dem unabhängigen Anspruch 14 gelöst. Vorteilhafte Ausgestaltungen der Erfindung sind Gegenstand von abhängigen Unteransprüchen.

Die Erfindung umfasst den Gedanken eines flexiblen bzw. biegsamen Schlauches mit einer Schlauchwand und einer Schlauchverstärkung, die an der Schlauchwand spiralförmig gebildet ist, wobei die Schlauchwand und / oder die Schlauchverstärkung wenigstens teilweise aus einem extrudierten thermoplastischen Material bestehen, nämlich einem thermoplastischen Elastomer oder einem Thermoplast, welches als Füllstoff eine Beimischung von die Abriebfestigkeit erhöhenden Partikeln enthält.

Nach einem weiteren Aspekt der Erfindung ist ein Verfahren zum Herstellen eines flexiblen Schlauches geschaffen, wobei das Verfahren die folgenden Schritte umfasst: Herstellen einer Schlauchwand und Herstellen einer Schlauchverstärkung, die an der Schlauchwand spiralförmig gebildet wird, wobei die Schlauchwand und / oder die Schlauchverstärkung wenigstens teilweise aus einem extrudierten thermoplastischen Material hergestellt werden, nämlich einem thermoplastischen Elastomer oder einem Thermoplast, welchem als Füllstoff eine Beimischung von die Abriebfestigkeit erhöhenden Partikeln beigemischt wird.

Es wurde überraschend gefunden, dass mittels Beimischen des Füllstoffes in Form von Partikeln einerseits die Abriebfestigkeit des extrudierten Materials des Schlauches wesentlich verbessert wurde und andererseits trotzdem die notwendigen Eigenschaften hinsichtlich der Flexibilität / Biegsamkeit des Schlauchproduktes erhalten werden können. Die verbesserte Abriebfestigkeit des extrudierten thermoplastischen Materials mit dem Füllstoff ermöglicht es, die Abschnitte des Schlauches, welche aus dem extrudierten thermoplastischen Material mit dem Füllstoff gebildet sind, im Vergleich zum Stand der Technik wahlweise mit geringerer Wanddicke auszuführen, wodurch Material eingespart wird. Die beigemischten Partikel weisen bevorzugt eine größere Materialhärte als das extrudierte thermoplastische Material auf.

Eine bevorzugte Weiterbildung der Erfindung sieht vor, dass der Füllstoff Nano- und / oder Mikropartikel enthält.

Eine vorteilhafte Ausfiihrungsform der Erfindung kann vorsehen, dass der Füllstoff Nano-und / oder Mikropartikel in Form von Glaskugeln enthält. Bei den die Abriebfestigkeit erhöhenden Partikeln handelt es sich dann um Nano- und / oder Mikroglaskugeln. Es kann vorgesehen sein, den die Abriebfestigkeit erhöhenden Füllstoff ausschließlich aus Nano- oder ausschließlich aus Mikrokugeln zu bilden, zum Beispiel aus Glaskugeln. Die Glaskugeln können alternativ mit anderen Nano- und / oder Mikrokugeln gemischt werden. Verwendet werden können alternativ zu oder in Kombination mit den Glaskugeln Nano- oder Mikropartikel aus anderen Materialien, die bevorzugt über eine Materialhärte verfügen, die größer als die des extrudierten thermoplastischen Materials ist.

Bei einer zweckmäßigen Ausgestaltung der Erfindung kann vorgesehen sein, dass das extrudierte thermoplastische Material den Füllstoff in einem Umfang von bis zu etwa 80 Gewichtsprozent, bevorzugt bis zu etwa 50 Gewichtsprozent und weiter bevorzugt bis zu etwa 30 Gewichtsprozent enthält

Eine vorteilhafte Ausfiihrungsform der Erfindung sieht vor, dass das extrudierte thermoplastische Material eine Shore A Härte von wenigstens etwa 70, bevorzugt von wenigstens etwa 80 und weiter bevorzugt von wenigstens etwa 98 aufweist.

Bevorzugt sieht eine Fortbildung der Erfindung vor, dass die die Abriebfestigkeit erhöhenden Partikeln einen Durchmesser von höchstens etwa 100 µm aufweisen. In einer bevorzugten Ausgestaltung verfügen die Mikropartikel über einen Durchmesser von wenigstens 5 µm.

Eine bevorzugte Weiterbildung der Erfindung kann vorsehen, dass die die Abriebfestigkeit erhöhenden Partikel im Wesentlichen homogen in dem extrudierten thermoplastischen Material verteilt sind. Auf diese Weise wird die Abriebfestigkeit im Wesentlichen gleichmäßig über die Schlauchbereiche verbessert, die aus dem extrudierten thermoplastischen Material mit dem Füllstoff hergestellt sind.

Bei einer vorteilhaften Ausgestaltung der Erfindung kann vorgesehen sein, dass die Schlauchwand mittels eines spiralförmig gewickelten Bandes gebildet ist. Bei dieser Ausführungsform kann in einer Ausgestaltung vorgesehen sein, die Schlauchverstärkung im Bereich der Überlappungsstellen des gewickelten Bandes einzulegen. Das gewickelte Band kann in einer Ausführungsform aus dem thermoplastischen Material mit dem Füllstoff extrudiert werden. Hierbei kann vorgesehen sein, die Schlauchverstärkung, zum Beispiel einen Draht, beim Extrudieren in das Band einzuarbeiten.

Eine Weiterbildung der Erfindung kann vorsehen, dass die Schlauchwand mit einem Textilmaterial gebildet ist, welches in der Schlauchverstärkung in einem einseitig offenen Profil geklemmt ist, wobei eine Beschichtung der Schlauchverstärkung aus dem extrudierten thermoplastischen Material gebildet ist. Das Profil ist zum Beispiel u-förmig gebildet.

Eine bevorzugte Weiterbildung der Erfindung sieht vor, dass die Schlauchverstärkung mit einem Kunststoffschlauch gebildet ist. In einer Ausführungsform besteht der Kunststoffschlauch aus dem extrudierten thermoplastischen Material mit dem Füllstoff. Alternativ oder ergänzend ist einer Ausgestaltung die Schlauchwand aus dem extrudierten thermoplastischen Material mit dem Füllstoff.

Bei einer zweckmäßigen Ausgestaltung der Erfindung kann vorgesehen sein, dass die Schlauchverstärkung mit einem verstärkenden Kernmaterial gebildet ist, welcher mit einer Kunststoffummantelung versehen ist. In einer Ausgestaltung besteht die Kunststoffummantelung aus dem extrudierten thermoplastischen Material mit dem Füllstoff. Alternativ oder ergänzend ist einer Ausgestaltung die Schlauchwand aus dem extrudierten thermoplastischen Material mit dem Füllstoff.

Eine vorteilhafte Ausführungsform der Erfindung sieht vor, dass der flexible Schlauch als Über- oder Unterdruckschlauch ausgeführt ist. Im Fall des Überdruckschlauches kann die Schlauchwand mit einem Gewebe als Druckträger gebildet sein.

In Verbindung mit dem Verfahren zum Herstellen eines flexiblen Schlauches gelten die vorangehend gemachten Ausführungen bezüglich vorteilhafter Ausgestaltungen entsprechend. In einer Ausgestaltung ist vorgesehen, dass beim Herstellen der Schlauchwand ein zunächst extrudiertes Bandmaterial, in welches eine Schlauchverstärkung integriert ist, wendel- oder spiralförmig gewickelt wird und das gewickelte Bandmaterial in Berührungs- oder Überlappungsbereichen mittels thermischer Behandlung verschmolzen wird, um die Schlauchwandung zu bilden. Auf diese Weise wird ein Schlauch hergestellt, welcher verschmolzenen Berührungs- oder Überlappungsbereiche aufweist.

Bei dieser Ausfiihrungsform kommen thermoplastische Materialien zum Einsatz, die mittels thermischer Behandlung, also Wärmezufuhr, in Kontakt- oder Überlappungsbereichen miteinander verschmolzen werden können, vorzugsweise bei möglichst niedrigen Prozesstemperaturen. Es wurde gefunden, dass bei dieser und anderen Ausführungsformen die folgenden Materialien besonders geeignet sind: Thermoplaste wie Polypropylen (PP), Polyethylen (PE) oder Polyvinylchlorid (PVC) sowie thermoplastische Elastomere wie thermoplastisches Polyurethan (TPE-U), Copolyester (TPE-E), Polyether-Block-Amid (TPE-A) oder thermoplastisches Polyolefin (TPE-O, TPE-V).

In einer weiteren Ausgestaltung ist vorgesehen, dass beim Herstellen der Schlauchwand ebenfalls ein zunächst extrudiertes Bandmaterial, welches in diesem Fall ohne Schlauchverstärkung hergestellt wird, wendel- oder spiralförmig gewickelt wird und das gewickelte Bandmaterial in Berührungs- oder Überlappungsbereichen mittels thermischer Behandlung verschmolzen wird, um die Schlauchwandung zu bilden. Auf diese Weise wird ein Schlauch hergestellt, welcher verschmolzenen Berührungs- oder Überlappungsbereiche aufweist. Sodann wird eine Schlauchverstärkung auf der äußeren Oberfläche aufgebracht, indem ein ummanteltes Verstärkungsmaterial, welches insbesondere als ein Drahtmaterial ausgeführt sein kann, aufgebracht und mittels thermischer Behandlung angeschmolzen wird, was auch als ein Schritt zum Anschweißen bezeichnet werden kann. Hierdurch verschmelzen Ummantelung, welche mittels Wärmezufuhr angeschmolzen werden kann, und Schlauchwandung. Der Schritt zum Aufbringen der Schlauchverstäkung kann in den Prozess der Schlauchausbildung beim wendel- oder spiralförmigen Wickeln integriert werden, also zeitgleich ausgeführt werden, wobei das Aufbringen der Schlauchverstärkung zum Beispiel einige Windungen nach dem Verschmelzen der Berührungs- oder Überlappungsbereiche erfolgen kann.

### Beschreibung bevorzugter Ausführungsbeispiele der Erfindung

Die Erfindung wird im Folgenden anhand von bevorzugten Ausfiihrungsbeispielen unter Bezugnahme auf Figuren einer Zeichnung näher erläutert. Hierbei zeigen:
Fig. 1 eine schematische Darstellung eines Abschnitts eines flexiblen Schlauches
Fig. 2 eine schematische Darstellung eines Abschnitts eines flexiblen Schlauches, bei dem ein Kunststoffschlauch die auf der Schlauchwand angeordnete Verstärkung bildet,
Fig. 3 eine schematische Darstellung eines Abschnittes eines flexiblen Schlauches, bei dem als Schlauchverstärkung auf der Schlauchwand ein Draht mit einer Kunststoffummantelung angeordnet ist, und
Fig. 4 eine schematische Darstellung eines Abschnittes eines flexiblen Schlauches, bei dem die Schlauchwand aus einem Textilmaterial ist, welches in einem einseitig offenen Profil der Schlauchverstärkung geklemmt ist.

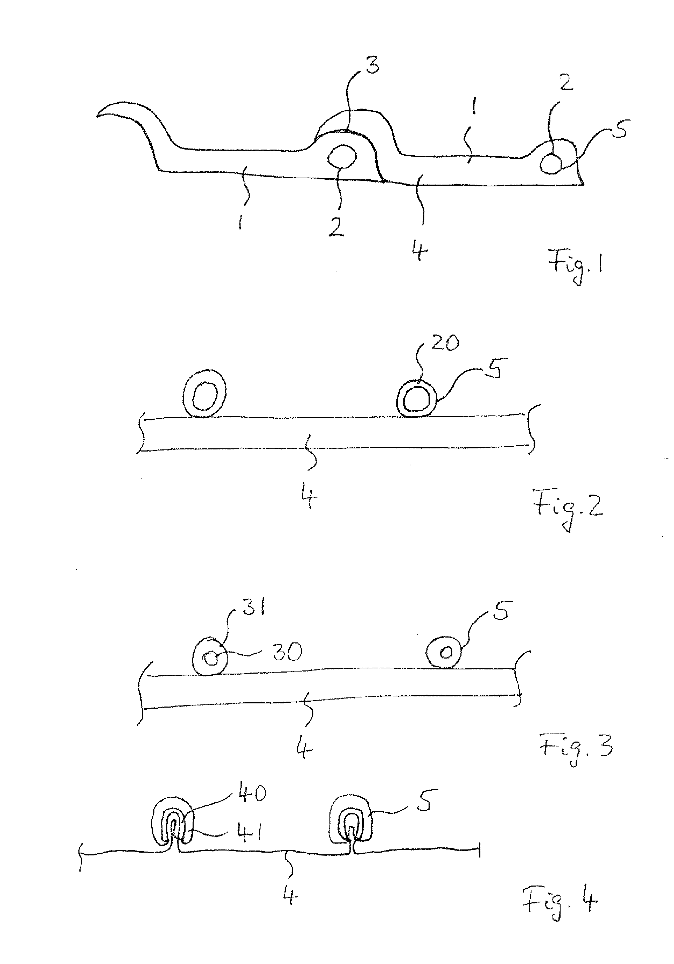

Fig. 1 zeigt eine schematische Darstellung eines Abschnitts eines flexiblen Schlauches, welcher mittels spiral- oder wendelförmigem Wickeln eines Bandes 1 hergestellt wird. Zur Herstellung des Bandes 1 wird ein thermoplastisches Ausgangsmaterial in einem Extruder verarbeitet, derart, dass dem thermoplastischen Ausgangsmaterial ein Füllstoff in Form von Mikrokugeln zugemischt wird, wobei im hier beschriebenen Ausführungsbeispiel Mikropartikel in Form von Glaskugeln zum Einsatz kommen. Verwendet werden können alternativ zu oder in Kombination mit den Mikroglaskugeln Nano- oder Mikropartikel aus anderen Materialien, die bevorzugt über eine Materialhärte verfügen, die größer als die des extrudierten thermoplastischen Materials ist. Bei dem thermoplastischen Ausgangsmaterial handelt es sich um ein thermoplastisches Elastomer oder ein Thermoplast, insbesondere PVC, Polyamid, Polypropylen oder Polyethylen.

Die Mikrokugeln werden in Pulverform dem thermoplastischen Ausgangsmaterial in dem Extruder beigemischt. Das schmelzflüssige Material wird anschließend zu dem Band 1 extrudiert. Hierbei wird als Schlauchverstärkung oder -armierung ein Draht 2 in das extrudierte Band 1 eingebunden. Beispielsweise handelt es sich bei dem Draht 2 um einen Federstahldraht.

Um nun mit Hilfe des extrudierten Bandes 1 einen flexiblen oder biegsamen Schlauch herzustellen, wird das extrudierte Band 1 wendel- oder spiralförmig aufgewickelt, sodass Überlappungsbereiche 3 entstehen, in denen das extrudierte Band 1 mittels Wärmezufuhr aufgeschmolzen und so verbunden wird. Auf diese Weise wird ein flexibler Schlauch hergestellt, welcher an einer Schlauchwand 4 über eine spiralförmig verlaufende Verstärkung 5 in Form des Drahtes 2 verfügt.

Fig. 2 zeigt eine schematische Darstellung eines Abschnitts eines flexiblen Schlauches, bei dem ein Kunststoffschlauch 20 die auf der Schlauchwand 5 angeordnete Schlauchverstärkung 4 bildet. Bei der in Fig. 2 dargestellten Ausfiihrungsform sind der Kunststoffschlauch 20 und / oder die Schlauchwand 4 aus dem extrudierten thermoplastischen Material, welches mit dem Füllstoff in Form von Mikrokugeln versehen ist.

Fig. 3 zeigt eine schematische Darstellung eines Abschnittes eines flexiblen Schlauches, bei dem als Schlauchverstärkung 5 auf der Schlauchwand 4 ein Draht 30 mit einer Kunststoffummantelung 31 angeordnet ist, die aus dem extrudierten thermoplastischen Material mit dem Füllstoff hergestellt ist. Die Kunststoffummantelung 31 kann mittels Wärmezufuhr beim wendelförmigen Wickeln auf die Schlauchwand 4 aufgeschweißt werden. Ergänzend oder alternativ kann bei dieser Ausführungsform die Schlauchwand 4 aus dem extrudierten thermoplastischen Material mit dem Füllstoff gebildet sein. Die Schlauchwand 4 ist bei dieser Ausfiihrungsform zum Beispiel hergestellt, indem, vergleichbar der Ausführung in Fig. 1, ein extrudiertes Band helixförmig aufgewickelt wird, wobei das extrudierte Band im Unterschied zu Fig. 1 keinen Draht 2 aufweist.

Fig. 4 zeigt eine schematische Darstellung eines Abschnittes eines flexiblen Schlauches, bei dem die Schlauchwand 4 aus einem Textilmaterial ist, welches in einem einseitig offenen Profil 40 der Schlauchverstärkung 5 geklemmt ist. Die Schlauchverstärkung 5 verfügt über eine äußere Beschichtung 41, die aus dem thermoplastischen Material mit dem Füllstoff in Form von Mikrokugeln hergestellt ist.

Die vorangehend erläuterten Ausführungsformen zeigen Beispiele für flexible oder biegsame Schläuche, die mit einer Schlauchwand und einer auf der Schlauchwand angeordneten und spiralförmig verlaufenden Schlauchverstärkung bzw. -armierung versehen sind. Die Verwendung des extrudierten thermoplastischen Materials mit dem Füllstoff in Form von Mikroglaskugeln kann jedoch auch für andere Ausgestaltungen derartiger Schläuche vorgesehen sein. Unabhängig von der konkreten Bauform wird bei Verwendung des Materials mit dem hier vorgestellten Füllstoff eine Verbesserung der Nutzungseigenschaften erreicht, insbesondere hinsichtlich der Abriebfestigkeit.

In einer Ausführungsform kann vorgesehen sein, die Schlauchwand 4 mehrschichtig zu bilden, wobei wenigstens eine Oberfläche, welche dem durch den Schlauch zu transportierenden Medium zugewandt ist, aus dem extrudierten thermoplastischen Material ist.

Die Erfindung wurde vorangehend unter Bezugnahme auf beispielhafte Schlauchausbildungen erläutert. Darüber hinaus kann die vorgesehene Verwendung der die Abriebfestigkeit erhöhenden Partikel unabhängig vom konkreten Schlauchfertigung bei beliebigen flexiblen Schläuchen genutzt werden, die wenigstens teilweise aus extrudiertem thermoplastischen Material hergestellt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Flexibler Schlauch, mit einer Schlauchwand (4) und einer Schlauchverstärkung (5), die an der Schlauchwand (4) spiralförmig gebildet ist, wobei die Schlauchwand (4) und / oder die Schlauchverstärkung (5) wenigstens teilweise aus einem extrudierten thermoplastischen Material bestehen, nämlich einem thermoplastischen Elastomer oder einem Thermoplast, welches als Füllstoff eine Beimischung von die Abriebfestigkeit erhöhenden Partikeln enthält.

2. Schlauch nach Anspruch 1, **dadurch gekennzeichnet, dass** der Füllstoff Nano- und / oder Mikropartikel enthält.

3. Schlauch nach Anspruch 1 oder 2, **dadurch gekennzeichnet, dass** der Füllstoff Nano- und / oder Mikropartikel in Form von Glaskugeln enthält.

4. Schlauch nach mindestens einem der vorangehenden Ansprüche, **dadurch gekennzeichnet, dass** das extrudierte thermoplastische Material den Füllstoff in einem Umfang von bis zu etwa 80 Gewichtsprozent, bevorzugt bis zu etwa 50 Gewichtsprozent und weiter bevorzugt bis zu etwa 30 Gewichtsprozent enthält.

5. Schlauch nach mindestens einem der vorangehenden Ansprüche, **dadurch gekennzeichnet, dass** das extrudierte thermoplastische Material eine Shore A Härte von wenigstens etwa 70, bevorzugt von wenigstens etwa 80 und weiter bevorzugt von wenigstens etwa 98 aufweist.

6. Schlauch nach mindestens einem der vorangehenden Ansprüche, **dadurch gekennzeichnet, dass** die die Abriebfestigkeit erhöhenden Partikeln einen Durchmesser von höchstens etwa 100 µm aufweisen.

7. Schlauch nach mindestens einem der vorangehenden Ansprüche, **dadurch gekennzeichnet, dass** die die Abriebfestigkeit erhöhenden Partikel im Wesentlichen homogen in dem extrudierten thermoplastischen Material verteilt sind.

8. Schlauch nach mindestens einem der vorangehenden Ansprüche, **dadurch gekennzeichnet, dass** die Schlauchwand (4) mittels eines spiralförmig gewickelten Bandes (1) gebildet ist.

9. Schlauch nach mindestens einem der vorangehenden Ansprüche, **dadurch gekennzeichnet, dass** die Schlauchwand (4) mit einem Textilmaterial gebildet ist, welches in der Schlauchverstärkung (5) in einem einseitig offenen Profil (40) geklemmt ist, wobei eine Beschichtung (41) der Schlauchverstärkung (5) aus dem extrudierten thermoplastischen Material gebildet ist.

10. Schlauch nach mindestens einem der Ansprüche 1 bis 8, **dadurch gekennzeichnet, dass** die Schlauchverstärkung (5) mit einem Kunststoffschlauch (20) gebildet ist.

11. Schlauch nach mindestens einem der Ansprüche 1 bis 6, **dadurch gekennzeichnet, dass** die Schlauchverstärkung (5) mit einem verstärkenden Kernmaterial (30) gebildet ist, welches mit einer Kunststoffummantelung (31) versehen ist.

12. Schlauch nach mindestens einem der vorangehenden Ansprüche, ausgeführt als Über-oder Unterdruckschlauch.

13. Schlauch nach mindestens einem der vorangehenden Ansprüche, **dadurch gekennzeichnet, dass** das thermoplastische Material ein Material aus der folgenden Gruppe von Materialien ist: Thermoplast wie Polypropylen (PP), Polyethylen (PE) oder Polyvinylchlorid (PVC) sowie thermoplastisches Elastomer wie thermoplastisches Polyurethan (TPE-U), Copolyester (TPE-E), Polyether-Block-Amid (TPE-A) oder thermoplastisches Polyolefin (TPE-O, TPE-V).

14. Verfahren zum Herstellen eines flexiblen Schlauches, wobei das Verfahren die folgenden Schritte umfasst:
- Herstellen einer Schlauchwand (4) und
- Herstellen einer Schlauchverstärkung (5), die an der Schlauchwand (4) spiralförmig gebildet wird, wobei die Schlauchwand (4) und / oder die Schlauchverstärkung (5) wenigstens teilweise aus einem extrudierten thermoplastischen Material hergestellt werden, nämlich thermoplastisches Elastomer oder Thermoplast, welchem als Füllstoff eine Beimischung von die Abriebfestigkeit erhöhenden Partikeln beigemischt wird.

15. Verfahren nach Anspruch 14, wobei die folgenden Schritte vorgesehen sind:
- Extrudieren eines Bandmaterials, in welches die Schlauchverstärkung (5) integriert wird,
- wendel- oder spiralförmiges Wickeln des Bandmaterials und
- Verschmelzen des gewickelten Bandmaterials in Berührungs- oder Überlappungsbereichen mittels thermischer Behandlung.

16. Verfahren nach Anspruch 14, wobei die folgenden Schritte vorgesehen sind:
- Extrudieren eines Bandmaterials,
- Bereistellen einer Schlauchverstärkung (5),
- wendel- oder spiralförmiges Wickeln des Bandmaterials,
- Verschmelzen des gewickelten Bandmaterials in Berührungs- oder Überlappungsbereichen mittels thermischer Behandlung und
- Aufbringen der Schlauchverstärkung (5) auf einer äußeren Schlauchoberfläche mittels thermischer Behandlung.
